Europäisches Patentamt

European Patent Office

Office européen des brevets

(11) Numéro de publication: **0 038 266**
**A1**

(12) # DEMANDE DE BREVET EUROPEEN

(21) Numéro de dépôt: **81400592.2**

(22) Date de dépôt: **14.04.81**

(51) Int. Cl.³: **G 01 L 7/08, G 01 L 19/06**

(30) Priorité: **15.04.80 FR 8008375**

(43) Date de publication de la demande: **21.10.81**
**Bulletin 81/42**

(84) Etats contractants désignés: **DE FR GB**

(71) Demandeur: **SOCIETE D'ELECTRICITE MORS, 2/4, Rue Isaac Newton Z.I. du Coudray, F-93155 Le-Blanc-Mesnil (FR)**

(72) Inventeur: **Pineau, Jean-Claude, 5ème Avenue, F-60260 Lamorlaye (FR)**
Inventeur: **Blanc, Gérard, 26, Rue Legendre, F-93600 Aulnay-Sous-Bois (FR)**

(74) Mandataire: **CABINET BONNET-THIRION, 95 Boulevard Beaumarchais, F-75003 Paris (FR)**

(54) **Transmetteur mécanique de pression à membrane, destiné aux dispositifs de mesure de pression de fluide.**

(57) L'invention concerne un transmetteur mécanique de pression pour dispositifs de mesure de pression de fluide, où un équipage mobile (21, 22) est déplacé dans un boîtier par la pression transmise dans une chambre d'expansion dudit boîtier, le déplacement dudit équipage mobile étant transmis à un appareil de mesure, au moins une partie (21, 22) dudit équipage étant dans une chambre de mesure (123) isolée du fluide par une membrane (3).

L'invention est caractérisée en ce que la membrane (3), à déroulement, comporte une couronne (31) entourant une proéminence (32, 33) à paroi inclinée (32), et le boîtier comporte un siège (124) pour ladite paroi (32) lors de l'application de la pression, le diamètre dudit siège (124) diminuant continûment de sa partie la plus proche de la chambre d'expansion (113) à sa partie la plus éloignée, afin que pour passer de sa position de repos à sa position d'appui, la membrane (3) se déroule sans élasticité ni raideur.

1

## Transmetteur mécanique de pression à membrane, destiné aux dispositifs de mesure de pression de fluide.

La présente invention est relative à un transmetteur mécanique de pression à membrane, destiné aux dispositifs de mesure de pression de fluide.

Il est courant d'évaluer une pression par la force qu'elle exerce sur une surface de référence, force que l'on mesure par le déflexion d'un ressort dont l'action est opposée à cette force. Il est alors nécessaire de séparer, de façon étanche, l'espace qui renferme le ressort et la chambre dans laquelle est admis le fluide dont on mesure la pression et où celle-ci agit sur la surface de référence. Les solutions classiques consistent à utiliser pour cette séparation, soit une membrane métallique ordinairement en forme de tube plissé, soit une membrane plane chimiquement indifférente aux divers fluides couramment utilisés, par exemple à base d'un caoutchouc synthétique.

La première de ces solutions correspond en principe aux pressions relativement importantes (quelques dizaines de bars), en raison de l'élasticité propre de la membrane, dont l'action s'ajoute à celle du ressort et introduit une hystérésis non négligeable. Les membranes planes sont, au contraire, utilisées de préférence pour les pressions faibles, étant peu déformables ; elles ne permettent que de faibles déflexions du ressort.

La présente invention a pour but d'éliminer ces inconvénients en réalisant une séparation parfaite des deux fonctions : étanchéité et mesure, sans aucune interaction, et de créer un transmetteur de pression à membrane admettant des déplacements importants.

A cet effet, l'invention concerne un transmetteur mécanique de pression à membrane, destiné aux dispositifs de mesure de pression de fluide, du type dans lequel un équipage mobile est déplacé à l'intérieur d'un boîtier par la pression du fluide transmis à l'intérieur d'une chambre d'expansion de fluide prévue dans ledit boîtier et contre l'action d'un ressort, le déplacement de l'équipage mobile étant lié à un dispositif de transmission électrique du déplacement à un appareil de mesure, au moins une partie de l'équipage mobile du transmetteur étant dans une chambre de mesure isolée du fluide dont on mesure la pression au moyen d'une membrane, transmetteur de pression caractérisé en ce que le boîtier est muni pour la membrane, du type à déroulement et comportant au repos une couronne entourant une proéminence centrale à paroi inclinée, d'un siège permettant l'appui contre lui de ladite paroi lors de l'application de la pression maximale au transmetteur, le diamètre dudit siège diminuant de manière continue de sa partie la plus proche de la chambre d'expansion du fluide à sa partie la plus éloignée de celle-ci, de telle sorte que pour passer de sa position de repos à sa position d'appui, la membrane se déroule sans élasticité ni raideur, pour n'introduire aucune contrainte parasite dans la chaîne de mesure. Grâce à cette structure, et à la présence d'une membrane à déroulement dont la texture particulière élimine toute élasticité, on peut obtenir des déformations considérables de la membrane sans allongement de celle-ci, donc sans absorption d'énergie. On peut alors utiliser des ressorts à très grande déflexion dont la caractéristique linéaire n'est pas affectée par un dispositif d'étanchéité. De plus, le grand déplacement rendu ainsi possible permet d'attaquer directement,sans amplification mécanique, un dispositif classique de transmission électrique, un potentiomètre par exemple, qui peut avoir une excellente définition en raison même du grand déplacement de l'équipage mobile.

Les caractéristiques et avantages de l'invention ressortiront d'ailleurs de la description qui va suivre, en référence aux dessins annexés représentant une forme de réalisation préférentielle d'un transmetteur mécanique de pression à membrane selon l'invention, à titre d'exemple non limitatif, dessins dans lesquels :

la figure 1 est une section longitudinale schématique d'un transmetteur de pression selon l'invention, dans une position de déflexion nulle ;

la figure 2 est une section longitudinale schématique du même transmetteur de pression, dans une position de déflexion importante ;

la figure 3 est une section longitudinale d'une partie d'une forme de réalisation pratique du transmetteur de pression selon l'invention ;

la figure 4 est une section montrant le profil au repos d'une membrane particulièrement appropriée au transmetteur de pression selon l'invention.

Le transmetteur de pression représenté sur les figures est constitué essentiellement par un boîtier 1, un équipage mobile 2 coulissant dans ce boîtier 1 entre une position de déflexion nulle et une position de déflexion maximale, une membrane 3 y délimitant deux chambres et solidarisée à l'équipage mobile 2, et un ressort de rappel 4 destiné à rappeler l'équipage mobile 2 à une position de déflexion nulle.

L'équipage mobile est constitué par un axe longitudinal 21 portant, à l'intérieur du boîtier 1, un piston 22 et éventuellement une coupelle 23 entre lesquels est pincée la zone centrale de la membrane 3, la zone périphérique de cette dernière étant immobilisée par rapport au boîtier 1.

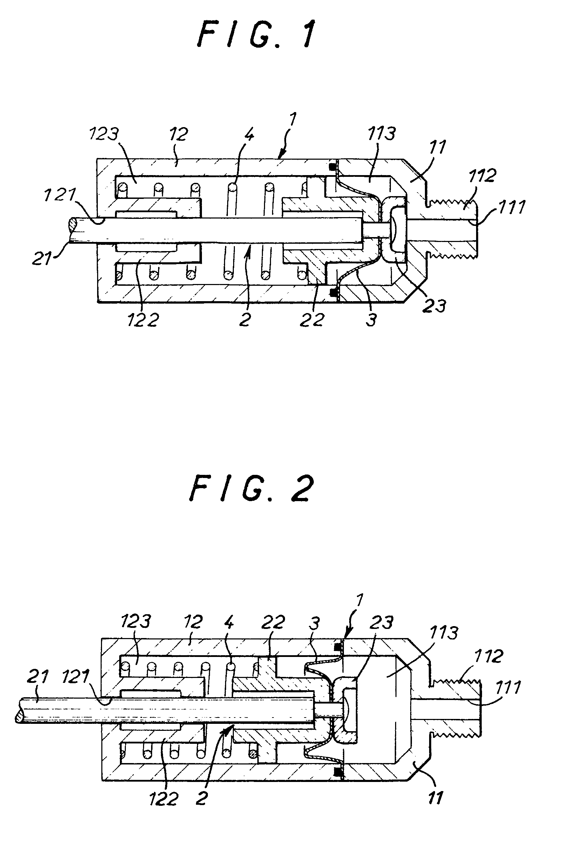

Dans le cas présent où le transmetteur de pression sert simplement à la mesure d'une pression de fluide, par exemple dans une enceinte, le boîtier 1, réalisé en deux parties 11, 12, comporte un orifice 111, 121 dans chacune de ces deux parties, l'un de ces orifices étant destiné au passage du fluide dont la pression doit être mesurée, et l'autre au passage de l'axe 21 de telle sorte que les variations de position (déflexions) de celui-ci puissent être repérées par un dispositif de mesure extérieur, tel qu'un dispositif électrique comprenant un potentiomètre de transmission dont le curseur est actionné par l'axe 21, par exemple à l'extrémité de celui-ci qui est extérieure au boîtier 1. Sur le plan pratique, les deux parties 11, 12 constituant le boîtier 1 peuvent être fixées l'une à l'autre par des brides non représentées sur les figures 1 et 2, prévues dans la zone où la membrane 3 est immobilisée par rapport au boîtier 1.

Dans la partie 11 comportant un orifice 111 pour le passage du fluide, cet orifice 111 est réalisé dans un embout 112 s'étendant à l'extérieur du boîtier 1 et destiné au raccordement à l'enceinte dans laquelle la pression du fluide doit être mesurée ; dans la partie 12 comportant un orifice 121 pour le passage de l'axe 21, l'orifice 121 est réalisé dans un canon cylindrique de guidage 122 s'étendant à l'intérieur du boîtier 1, dont la surface intérieure sert au guidage de l'axe 21 et la surface extérieure au guidage du ressort de rappel 4 hélicoïdal, lequel est enfilé autour du dit canon de guidage 122, entre ce canon de guidage et la paroi au moins approximativement cylindrique de la partie 12 du boîtier 1 qui comporte l'orifice 121 pour l'axe 21. La zone périphérique de la membrane 3 est donc ici également immobilisée par pincement entre les deux parties 11, 12 du boîtier 1, isolant ainsi la chambre 113 d'expansion du fluide dont la pression doit être mesurée et contenant la coupelle 23 de la chambre 123 de mesure contenant l'axe 21, le piston 22 et le ressort 4.

Dans la position de déflexion nulle, la coupelle 23 portée par l'axe 21 et solidarisée à lui est au contact de la face interne de la paroi de la chambre 113 au voisinage de l'embout 112, grâce à l'action que le ressort de rappel 4 en appui contre une paroi du boîtier autour du canon de guidage exerce sur une embase périphérique du piston 22 porté également par l'axe 21 ; lorsqu'une pression est appliquée dans la chambre 113 d'expansion du fluide, l'équipage mobile se déplace contre l'action du ressort 4, c'est-à-dire que la coupelle 23 s'éloigne de la face interne de la paroi de la chambre 113 qui est au voisinage de l'embout 112, et le déplacement de l'axe 21 est transmis au dispositif de mesure extérieur. La surface de référence sur laquelle agit la pression à mesurer est donc définie par la coupelle 23, et l'adaptation du capteur à une gamme particulière de pressions résulte du choix de la surface de la coupelle 23 et du ressort 4. Le dispositif de mesure extérieur, non représenté, peut être un dispositif classique, avec une transmission potentiométrique ou à induction, éventuellement du type transformateur différentiel ou dérivé.

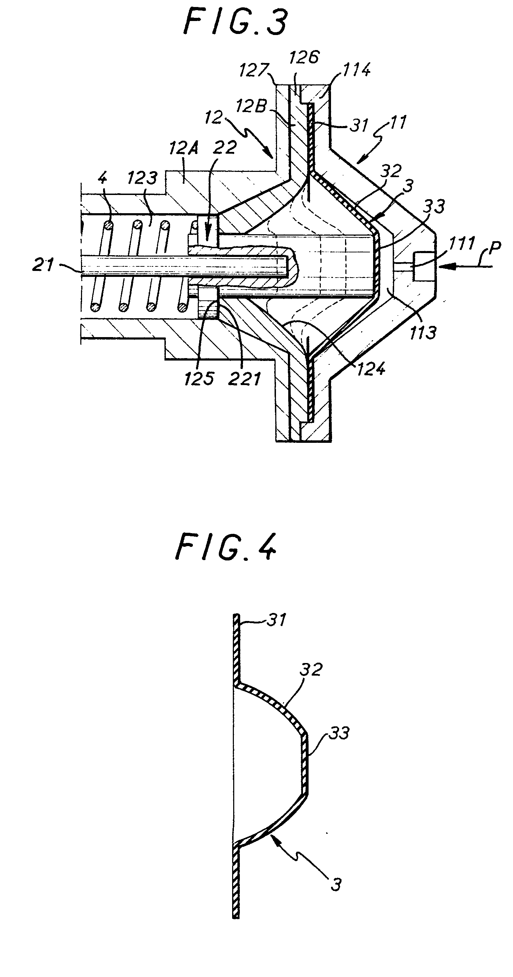

Dans une forme de réalisation pratique particulièrement intéressante représentée partiellement sur la figure 3 où les mêmes repères sont affectés aux mêmes organes que précédemment, la partie 12 du boîtier 1 dans laquelle coulisse le piston 22 comporte, du côté de la partie 11 comportant un orifice 111 pour le passage du fluide, un siège 124 pour la membrane 3, dont le diamètre diminue de manière continue de sa partie la plus proche de la chambre 113 d'expansion du fluide à sa partie la plus éloignée de celle-ci. En première approximation, ce siège 124 de la chambre 123 de mesure dans laquelle se déroule la membrane 3, qui est donc situé du côté de cette dernière qui est opposé à celui sur lequel agit la pression P, est usiné conique ou plutôt tronconique ; l'angle du tronc de cône est sensiblement égal à celui de la membrane au repos (celle-ci comportant une proéminence centrale approximativement tronconique), de telle sorte que, lorsque la pression maximale est appliquée, la membrane 3, ayant pris une forme à peu près symétrique de celle qu'elle avait au repos, soit entièrement en appui et n'encaisse plus aucun effort dans sa structure. La forme du siège 124, c'est-à-dire de la surface d'appui de la membrane peut être encore optimalisée compte tenu de la déformation réelle de la méridienne de la surface de la membrane 3 ; elle peut ainsi présenter un profil curviligne, de telle sorte que le siège ait la forme d'un tronc de cône à génératrice curviligne ; l'appui est alors très progressif, ce qui est particulièrement favorable au fonctionnement du dispositif. Plusieurs positions intermédiaires de la membrane entre sa position de repos (représentée en traits pleins) et sa position à pression maximale dans laquelle elle est en appui contre le siège 124, sont représentées en traits interrompus sur la figure 3. Par ailleurs, la position limite de la membrane 3 au repos peut être déterminée par une butée 125 destinée à coopérer avec une embase périphérique 221 du piston 22. Pour des raisons pratiques, dans cette variante de réalisation, la partie 12 du boîtier peut être réalisée elle-même en deux pièces 12A, 12B : une pièce postérieure 12A où se trouve le ressort 4 et percée de l'orifice 21, non visible sur la figure 4, et une pièce antérieure 12B où se déroule la membrane 3 et munie du siège 124 et de la butée 125. Ces deux pièces peuvent alors être fixées par des brides 126, 127, elles-mêmes fixées à la bride correspondante 114 de l'autre partie 11 du boîtier, comme mentionnées plus haut, mais non représentées sur les figures 1 et 2.

Des résultats particulièrement intéressants sont obtenus grâce à l'application à ce transmetteur de pression d'une membrane à déroulement susceptible de se déformer sans élasticité ni raideur, c'est-à-dire sans que ses changements de forme engendrent des allongements générateurs de tensions internes. On peut, par exemple, utiliser des membranes formées sous pression à chaud, avec un film central en polyamide ou en polyester constituant une sorte de toile, noyé entre deux films externes formés à chaud, en des matériaux dont la nature est fonction de celle des corps dont on veut mesurer la pression et des conditions d'ambiance exigées (température, vibrations, etc.), par exemple des matériaux élastomères, tels que nitrile, silicone fluoré, etc.

Une membrane 3 particulièrement bien appropriée, représentée sur la figure 4, est obtenue à partir d'une toile tissée, livrée en plaques légèrement enduites de silicone sur ses deux faces. Dans sa forme finale, cette membrane doit comporter une couronne approximativement plane et circulaire entourant une proéminence centrale. Sa fabrication implique donc, après découpage des flans, un calandrage et une mise en forme à chaud, après enduction sur les deux faces d'un fluosilicone sélectionné spécialement pour son inertie chimique et surtout pour sa tenue dans une large gamme de températures (de -55°C à + 175°C en fonctionnement et 200°C en pointe). Le formage à chaud s'accompagne d'une vulcanisation du fluosilicone. Cette opération de formage est délicate en raison de la "flèche" F très importante qu'on doit obtenir sur un diamètre toujours faible. C'est la texture de la toile qui doit être mise en forme car, même après vulcanisation, le fluosilicone n'a aucune tenue mécanique, ce qui est d'ailleurs souhaitable pour obtenir une membrane exempte de contraintes mécaniques. Lorsque cette double opération de formage et de vulcanisation n'est pas parfaitement réussie, la forme stabilisée est incorrecte et il n'y a pas de retouche possible. Le profil final au repos de la membrane 3 présente donc, se succédant radialement du pourtour de la membrane à son centre, une zone approximativement plane 31, formant couronne, et une zone à paroi inclinée 32 de forme générale approximativement tronconique à génératrices légèrement curviligne bombée vers l'extérieur et suivie elle-même d'une zone de sommet approximativement plane 33, formant proéminence ; sous l'action de la pression, la zone approximativement tronconique traverse le plan de la zone approximativement plane 31 en se déroulant, de manière à passer dans l'autre demi-espace délimité par ledit plan de la zone approximativement plane 31.

Ainsi équipés, les transmetteurs de pression selon l'invention ont une caractéristique linéaire et précise, et sont facilement adaptables à une grande diversité de gammes de pressions. Ils sont particulièrement avantageux pour les pressions de l'ordre du bar, pour lesquelles les dispositifs classiques voient leur précision relative sensiblement affectée par les phénomènes d'hystérésis.

En équipant les deux côtés de l'axe 21 comme représenté à droite sur les figures, c'est-à-dire avec un ressort entre deux pistons coopérant avec une coupelle respective pour pincer chacun une membrane à déroulement, en équipant chaque extrémité du boîtier d'un orifice pour le passage d'un fluide, et en reportant dans la partie centrale dudit boîtier entre les deux membranes le dispositif de transmission au dispositif de mesure extérieur, on réalise un capteur de pression différentielle possédant les mêmss avantages,

8                                           0038266

notamment :

  - une séparation parfaitement étanche entre les fluides
et les organes de mesure, n'introduisant aucune contrainte
parasite génératrice d'hystérésis, et

  - une grande course de l'organe de mesure, sans utilisation de dispositifs d'amplification mécanique, ce qui élimine les erreurs de fidélité inhérentes à de tels dispositifs
et permet d'obtenir une très bonne définition de la mesure.

  Bien entendu, l'invention n'est pas limitée aux formes
de réalisation ci-dessus décrites et représentées, et on
pourra prévoir d'autres formes et d'autres modes de réalisation sans sortir du cadre de l'invention, on pourra notamment
prévoir divers aménagements tels que la suppression de la
coupelle 23 par exemple, la position limite de l'équipage
mobile à faible pression ou sans pression de fluide étant
obtenue soit par appui de la membrane 3 contre la partie 11
du boîtier 1 comportant l'orifice 111 pour le fluide, soit
par appui par exemple d'une embase 221 du piston 22 contre
une butée 125, comme c'est le cas sur la figure 3.

0038266

1

REVENDICATIONS

1. Transmetteur mécanique de pression à membrane, destiné aux dispositifs de mesure de pression de fluide, du type dans lequel un équipage mobile est déplacé à l'intérieur d'un boîtier par la pression du fluide transmis à l'intérieur d'une chambre d'expansion de fluide prévue dans ledit boîtier et contre l'action d'un ressort, le déplacement de l'équipage mobile étant lié à un dispositif de transmission électrique du déplacement à un appareil de mesure, au moins une partie de l'équipage mobile du transmetteur étant dans une chambre de mesure isolée du fluide dont on mesure la pression au moyen d'une membrane, transmetteur de pression caractérisé en ce que le boîtier (1) est muni pour la membrane (3), du type à déroulement et comportant au repos une couronne (31) entourant une proéminence centrale (32, 33) à paroi inclinée (32), d'un siège (124) permettant l'appui contre lui de ladite paroi (32) lors de l'application de la pression maximale au transmetteur, le diamètre dudit siège (124) diminuant de manière continue de sa partie la plus proche de la chambre (113) d'expansion du fluide à sa partie la plus éloignée de celle-ci, de telle sorte que pour passer de sa position de repos à sa position d'appui, la membrane (3) se déroule sans élasticité ni raideur, pour n'introduire aucune contrainte parasite dans la chaîne de mesure.

2. Transmetteur mécanique de pression selon la revendication 1, caractérisé en ce que le siège (124) est de forme générale au moins approximativement tronconique, le diamètre du tronc de cône diminuant de sa partie la plus proche de la chambre (113) d'expansion du fluide à sa partie la plus éloignée de celle-ci.

3. Transmetteur mécanique de pression selon l'une quelconque des revendications 1 et 2, caractérisé en ce que le siège (124) de forme approximativement tronconique, présente une forme de révolution à génératrice curviligne.

4. Transmetteur mécanique de pression selon l'une quelconque des revendications 1 à 3, caractérisé en ce que le boîtier (1) est en au moins deux parties (11,12) entre lesquelles est insérée la membrane (3).

5. Transmetteur mécanique de pression selon la revendication 4, caractérisé en ce que le boîtier comporte deux parties dont au moins l'une est en deux pièces, le siège (124) étant usiné dans l'une desdites pièces.

6. Transmetteur mécanique de pression selon l'une quelconque des revendications 4 et 5, caractérisé en ce que les deux parties (11,12) entre lesquelles est insérée la membrane (3) sont fixées l'une à l'autre par des brides (126,127).

7. Transmetteur mécanique de pression selon l'une quelconque des revendications 1 à 6, caractérisé en ce que la membrane comporte un film central inséré entre deux films externes, ladite membrane ayant au repos une zone proéminente (32,33) de forme sensiblement tronconique, approximativement dans la partie centrale d'une couronne (33) sensiblement plane.

8. Transmetteur mécanique de pression selon l'une quelconque des revendications 1 à 7, caractérisé en ce que le film central de la membrane est une toile tissée légèrement enduite de silicone sur ses deux faces, les deux films externes étant en fluosilicone vulcanisé.

9. Transmetteur mécanique de pression selon les revendications 2 et 7, caractérisé en ce que la zone proéminente sensiblement tronconique (32,33) de la membrane au repos et le siège (124) de forme générale approximativement tronconique ont sensiblement la même conicité.

10. Transmetteur mécanique de pression selon l'une quelconque des revendications 1 à 9, caractérisé en ce que la membrane (3) est appliquée sur un piston (22) soumis à

3

0038266

l'action dudit ressort (4).

11. Transmetteur mécanique de pression selon l'une quelconque des revendications 1 à 10, caractérisé en ce que le dit ressort (4) prend appui d'un côté contre une embase périphérique du piston (22) et de l'autre contre une paroi du boîtier.

12. Transmetteur mécanique de pression selon l'une quelconque des revendications 1 à 11, caractérisé en ce qu'il comporte d'un côté de la membrane (3) un orifice (111) pour le passage du fluide dont la pression doit être mesurée, et de l'autre côté de la membrane (3) un orifice (121) pour le passage d'un organe témoin (21) du déplacement de l'équipage mobile (21,22,23).

13. Transmetteur mécanique de pression selon l'une quelconque des revendications 1 à 12, caractérisé en ce qu'il comporte de chaque côté une membrane et un orifice pour le passage de fluides dont la pression différentielle doit être mesurée.

# F I G. 1

# F I G. 2

0038266

FIG.3

FIG.4

| Catégorie | Citation du document avec indication, en cas de besoin, des parties pertinentes | Revendica-tion concernée |
|---|---|---|
| X | FR - A - 2 095 577 (ALFA ROMEO S.P.A.)<br>* Page 3, lignes 9-40; page 4, lignes 1-18; figures 1 et 2 * | 1,2,4, 6,9-12 |
| X | US - A - 2 241 056 (R. CHILTON)<br>* Page 1, colonne de gauche, lignes 22-56 et colonne de droite, lignes 1-20; figure 1 * | 1,2,4, 6,10-13 |
|  | US - A - 3 779 080 (C.H. SMITH)<br>* Résumé; figures 1 et 2 * | 1,4,6, 10-12 |
|  | US - A - 3 880 010 (E.I. PIETSCH)<br>* Résumé; figures 1,2 * | 1,4,6, 10-13 |
|  | FR - A - 1 355 765 (ETABLISSEMENTS ED. JAEGER)<br>* En entier * | 7,8 |
|  | FR - A - 1 317 420 (PARKINSON COWAN LTD)<br>* En entier * | 7 |
| A | FR - A - 1 521 411 (ETABL. MAR-CHANT et al.)<br>* Résumé; figures 2,5 * | 1 |

**DOCUMENTS CONSIDERES COMME PERTINENTS**

**CLASSEMENT DE LA DEMANDE (Int. Cl.³)**

G 01 L 7/08
19/06

**DOMAINES TECHNIQUES RECHERCHES (Int. Cl.³)**

G 01 L 7/08
19/06
7/16

**CATEGORIE DES DOCUMENTS CITES**

X: particulièrement pertinent
A: arrière-plan technologique
O: divulgation non-écrite
P: document intercalaire
T: théorie ou principe à la base de l'invention
E: demande faisant interférence
D: document cité dans la demande
L: document cité pour d'autres raisons
&: membre de la même famille, document correspondant

Le présent rapport de recherche a été établi pour toutes les revendications

| Lieu de la recherche | Date d'achèvement de la recherche | Examinateur |
|---|---|---|
| La Haye | 14-07-1981 | VAN ASSCHE |

OEB Form 1503.1 06.78

| DOCUMENTS CONSIDERES COMME PERTINENTS | | | CLASSEMENT DE LA DEMANDE (Int. Cl. 3) |
|---|---|---|---|
| Catégorie | Citation du document avec indication, en cas de besoin, des parties pertinentes | Revendication concernée | |
| A | US - A - 3 411 475 (S.D. SHEFF) <br> * Colonne 2, lignes 15-44; figure 2 * <br> -- | 1 | |
| A | FR - A - 2 358 649 (G. RENAUD) <br> * Page 4, ligne 29 - page 5, ligne 16; figure 2 * <br> -- | 1 | |
| A | DE - A - 2 457 138 (FR. SAUTER AG.) <br> * Page 5, alinéas 2 et 3; figures 5 et 6 * <br> -- | 1 | **DOMAINES TECHNIQUES RECHERCHES (Int. Cl. 3)** |
| A | FR - A - 949 337 (NATIONAL PRESSURE COOKER) <br> * Résumé; figure 2 * <br> -- | 1 | |
| A | US - A - 2 618 977 (F.W. HOTTENROTH) <br> * Revendication 1; figures 3 et 4 * <br> -- | 1 | |
| A | US - A - 2 172 694 (R. BLONDELLE) <br> * Page 1, colonne de droite, lignes 3-15; figures 1 et 2 * <br> ---- | 1 | |